# EUROPEAN PATENT APPLICATION

(11) **EP 1 703 691 A1**
(43) Date of publication of application: **20.09.2006**
(21) Application number: 05075657.6
(22) Date of filing: 18.03.2005
(51) Int. Cl.: H04L 29/06

(54) **Method or system for processing requests for setting up a network session**

(71) Applicant: Nederlandse Organisatie voor toegepast-natuurwetenschappelijk Onderzoek TNO, 2628 VK Delft (NL)
(72) Inventor: Blom, Marcus Anthonius, 2273 VS Voorburg (NL)
(74) Representative: Winckels, Johannes Hubertus F.

(57) **Abstract**

Method and system for processing a request from a requesting party (3 a) to a destination party (3b) for setting up a session through a network (1). In e.g. SIP based network servers 2, processors 4a, 4b are adapted for performing a functional check, in which one or more functional parameters related to the intended session, are checked against functional parameters technically required for establishing such a session. The servers 2 additionally comprise processors 5a, 5b which are adapted for performing a Quality-of-Service check in which one or more Quality-of-Service parameters related to the intended session, are checked against Quality-of-Service parameters as requested by the requesting party or by the destination party or by both, or by the network itself, with relation to the relevant session to be set up.

## Description

### FIELD OF THE INVENTION

The invention refers to processing requests for setting up a network session.

### BACKGROUND OF THE INVENTION

According to the prior art technique used for setting up a session through e.g. a packet switched network (also called "signaling") only a check is performed -by network control means- to functional properties of the session to be set up like subscription parameters (source and target address, billing parameters etc.), coding parameters, privacy parameters, etc. A disadvantage is that a session -which may be set up using the IETF Session Initiation Protocol (SIP)- may be considered to be established successfully only if also the performed quality (Quality-of-Service) is sufficient. However, this Quality-of-Service check is not performed at setting up a session according to the prior art as can be learned from e.g. http://www.ietf.org/html.charters/sip-charter.html. The session may be permitted (or refused) based on only the functional properties and requirements -required by the network itself- without any guarantee that the session will meet the quality requirements as requested or required by e.g. the originating or destination party.

### SUMMARY OF THE INVENTION

Aim of the present invention is to meet the disadvantage of the state of the art session setup with e.g. the current SIP protocol. To that end the method for processing a request from a requesting party to a destination party for setting up a session through a network, comprises a functional check step in which one or more functional parameters related to the intended session are checked against functional parameters technically required for establishing such a session. The novel method comprises, moreover, a Quality-of Service check step. In that (additional) Quality-of-Service check step one or more Quality-of-Service parameters related to the intended session, are checked against Quality-of-Service parameters as requested (required or preferred) by the requesting party or by the destination party for the relevant session to be set up, or by both parties, either acting individually or in mutual cooperation. In said Quality-of-Service check step, moreover, one or more Quality-of-Service parameters may be checked against Quality-of-Service parameters as requested (set) by the network itself.

The functional parameters will preferably be originated by the network (e.g. network control means), comprising (minimum) technical requirements for any requested network session. The Quality-of-Service parameters preferably are originated by the requesting party, which party e.g. may set up a session to a destination party which has a certain maximum delay rate, maximum loss rate, minimum bandwidth etc. However, the Quality-of-Service parameters may also -solely or additionally- be set by the destination party, which may prefer or require that a session set up to it from an originating party meets certain minimum Quality-of-Service requirements like a certain maximum delay rate, maximum loss rate, minimum bandwidth etc. As stated before, one or more Quality-of-Service parameters may also be checked against (e.g. commonly valid for a certain group or class of parties) Quality-of-Service parameters as requested (set) by the network itself. (e.g. on behalf of the relevant group or class of parties).

The current (e.g. SIP) technique is, according to the novel method outlined here, extended with a function wherein the requested or preferred Quality-of-Service parameters of the new session are compared with (checked against) the Quality-of Service of the session to be set up which may be expected (or predicted), e.g. by means of retrieving from a Quality-of-Service database or pre-calculating by means of a Quality-of-Service algorithm. The requested SIP session may e.g. only be permitted if, besides the already existing functional requirements, also the Quality-of-Service requirements are satisfied. A SIP session which complies with the functional requirements but which, at the moment of a setup is not able to offer the requested Quality-of-Service, may be refused or processed otherwise. Also a Quality-of-Service negotiation action may be performed with one or more session parties. The new functionality proposed here, will preferably be implemented in addition to the existing functionality, e.g. residing in a router, a gateway or a signaling server. In reality, this may be established in the "policy" functionality of a SIP server where -until now- only the functional specifications were checked.

### EXEMPLARY EMBODIMENT

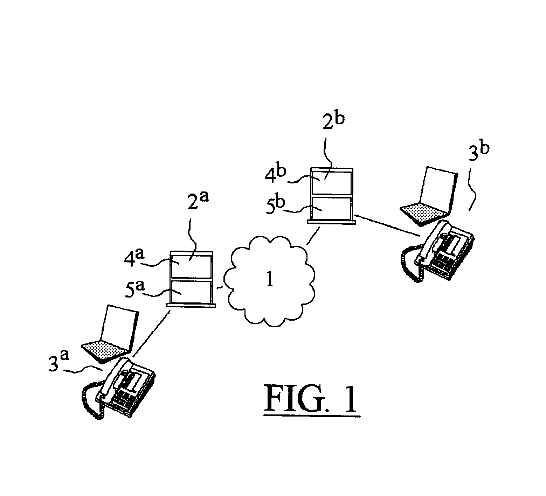

Figure 1 shows an exemplary embodiment of a system which is fit for performing the method as suggested in the previous paragraph.

The system shown in figure 1 comprises a network 1 -e.g. a packet switched network or a multimedia network like the Internet, which can be accessed by means of SIP servers 2 (2a, 2b). Server 2a may receive a request from a requesting party, e.g. a data/voice terminal 3a for setting up a session through the network 1 to a destination party, formed by a data/voice terminal 3b, to be set up via server 2b.

Each SIP server 2 comprises a processor 4a resp. 4b adapted for performing a functional check w.r.t. the requested session. Moreover, each SIP server 2 in this new configuration comprises a processor 5a resp. 5b adapted for performing a Quality-of-Service check w.r.t. the requested session.

Thus, after reception of the setup request the functionality processor 4a at the originating side of the network will perform a functional check, may be in cooperation with the functionality processor 4b at the network's destination side. The functional check in processor 4a includes that one or more functional parameters, related to the intended session, are checked against (compared with) functional parameters which technically are required for establishing the requested session. As until now not any Quality-of-Service items were drawn into consideration. However, this novel method includes a Quality-of-Service check step, performed, in this exemplary embodiment, by a Quality-of-Service processor 5a at the originating side, which is adapted for performing -may be in cooperation with a Quality-of-Service processor 5b at the destination side- to perform a Quality-of-Service check. During the Quality-of-Service check processor 5a and/or processor 5b checks (compares) one or more Quality-of-Service parameters related to the intended session against (with) the Quality-of-Service parameters requested either by the originating terminal 3a, requesting for the session to be set up, or by the destination terminal 3b, or by both terminals 3a and 3b, e.g. both having their Quality-of-Service requirements with relation to the session to be set up from resp. towards it.

Additionally, one or more Quality-of-Service parameters may also be checked against Quality-of-Service parameters as requested (set) by the network itself, e.g. representing minimum Quality-of-Service requirements valid for a (e.g. country related) network domain or group/class of parties (e.g. "premium users").

The functional parameters, substantially containing more or less technical requirements for network sessions of the requested kind, have to be met in each case: when those technical requirements are not met, it may be not possible for the network to set up the required session from terminal 3a to 3b or only under certain restrictions.

The Quality-of-Service parameters are not based on network technical ("functional") requirements -a session could be set up between 3a and 3b even if the Quality-of-Service couldn't be met- but the Quality-of-Service parameters are set by the originating party 3a and/or by the destination party 3b, either party requesting its own Quality-of-Service requirements -defined in Quality-of-Service parameters- implying e.g. a maximum delay rate, a maximum loss rate, a minimum bandwidth, security requirements, etc.

## Claims

1. Method for processing a request from a requesting party (3a) to a destination party (3b) for setting up a session through a network (1), comprising
- a functional check step, in which one or more functional parameters related to the intended session, are checked against functional parameters technically required for establishing such a session;
- a Quality-of-Service check step, in which one or more Quality-of-Service parameters related to the intended session, are checked against Quality-of-Service parameters as requested by the requesting party or by the destination party or by both with relation to the relevant session to be set up.

2. Method according to claim 1, wherein the network is a network adapted for using the Session Initiation Protocol.

3. Method according to claim 1, wherein the functional parameters are originated by the network and at least some of the Quality-of-Service parameters are originated by the requesting party (3a).

4. Method according to claim 1 or 3, wherein the functional parameters are originated by the network and at least some of the Quality-of-Service parameters are originated by the destination party (3b).

5. Method according to claim 1 or 4, wherein the functional parameters are originated by the network and at least some of the Quality-of-Service parameters are originated by the network too.

6. System for processing a request from a requesting party (3a) to a destination party (3b) for setting up a session through a network (1), comprising
- means (4a, 4b) adapted for performing a functional check, in which one or more functional parameters related to the intended session, are checked against functional parameters technically required for establishing such a session;
- means (5a, 5b) adapted for performing a Quality-of-Service check, in which one or more Quality-of-Service parameters related to the intended session, are checked against Quality-of-Service parameters as requested by the requesting party or by the destination party or by both with relation to the relevant session to be set up.

7. System according to claim 6, wherein the network is a network adapted for using the Session Initiation Protocol.

8. System according to claim 6, wherein the functional parameters are originated by the network and at least some of the Quality-of-Service parameters are originated by the requesting party (3a).

9. System according to claim 6 or 8, wherein the functional parameters are originated by the network and at least some of the Quality-of-Service parameters are originated by the destination party (3b).

10. System according to claim 6 or 9, wherein the functional parameters are originated by the network and at least some of the Quality-of-Service parameters are originated by the network too.
